# EUROPÄISCHE PATENTSCHRIFT

(11) **EP 1 185 780 B1**
(45) Veröffentlichungstag und Bekanntmachung des Hinweises auf die Patenterteilung: **23.03.2005**
(21) Anmeldenummer: 00990569.6
(22) Anmeldetag: 22.12.2000
(51) Int. Cl.: F02M 61/16, B21H 1/00

(54) **KRAFTSTOFFEINSPRITZVENTIL FÜR BRENNKRAFTMASCHINEN UND EIN VERFAHREN ZUR HERSTELLUNG DESSELBEN**
FUEL INJECTION VALVE FOR INTERNAL COMBUSTION ENGINES AND A METHOD FOR PRODUCING SAME
SOUPAPE D'INJECTION DE CARBURANT POUR MOTEURS A COMBUSTION INTERNE, ET SON PROCEDE DE PRODUCTION

(30) Priorität: 22.01.2000 DE 10002715
(43) Veröffentlichungstag der Anmeldung: 13.03.2002
(73) Patentinhaber: ROBERT BOSCH GMBH, 70442 Stuttgart (DE)
(72) Erfinder: KULOVITS, Walter, 88299 Leutkirch (DE); GOTTSCHLING, Juergen, 71686 Remseck (DE)
(86) Internationale Anmeldenummer: PCT/DE2000/004586
(87) Internationale Veröffentlichungsnummer: WO 2001/053684

(56) Entgegenhaltungen:
- DE-A- 4 446 071
- DE-A- 19 608 575
- DE-A- 19 801 491

## Beschreibung

### Stand der Technik

Die Erfindung geht von einem Kraftstoffeinspritzventil für Brennkraftmaschinen nach der Gattung des Patentanspruchs 1 aus. Bei einem solchen aus der Offenlegungsschrift DE 196 08 575 A1 bekannten Kraftstoffeinspritzventil ist ein Ventilkörper mit einer Spannmutter unter Zwischenlage einer Zwischenscheibe gegen einen Ventilhaltekörper axial verspannt. Im Ventilkörper ist eine Bohrung ausgebildet, in der ein kolbenförmiges, entgegen einer Schließkraft axial bewegliches Ventilglied angeordnet ist. Am brennraumseitigen Ende des Ventilgliedes ist an diesem eine Ventildichtfläche ausgebildet, die mit einem am brennraumseitigen Ende der Bohrung ausgebildeten Ventilsitz zusammenwirkt, so daß das Ventilglied durch eine Öffnungshubbewegung entgegen der Schließkraft wenigstens eine Einspritzöffnung aufsteuert. Im Ventilhaltekörper, der Zwischenscheibe und dem Ventilkörper ist eine Zulaufbohrung ausgebildet, durch die Kraftstoff unter hohem Druck bis zum Ventilsitz gelangt und bei geöffnetem Kraftstoffeinspritzventil durch die Einspritzöffnungen in den Brennraum einer Brennkraftmaschine eingespritzt wird.

Im Ventilhaltekörper ist mittig ein Hohlraum ausgebildet, in dem eine Feder unter Vorspannung angeordnet ist. Die Feder stützt sich dabei brennraumzugewandt an einem mit dem Ventilglied verbundenen Ventilteller ab und erzeugt so die Schließkraft auf das Ventilglied. Der Zulaufkanal verläuft in der Wand des Federraums und parallel zu diesem. Hierbei ergibt sich bei den bekannten Kraftstoffeinspritzventilen der Nachteil, daß bei einer schlanken Bauweise des Ventilhaltekörpers die Wand des Zulaufkanals eine gewisse Wandstärke nicht unterschreiten darf, um dem Kraftstoffdruck widerstehen zu können. Dadurch ist einer weiteren Verschlankung des Ventilhaltekörpers bzw. einer Erhöhung des Kraftstoffdrucks im Zulaufkanal eine Grenze gesetzt, die mit der bisherigen Konstruktion nicht unterschritten werden kann.

### Vorteile der Erfindung

Das erfindungsgemäße Kraftstoffeinspritzventil mit den kennzeichnenden Merkmalen des Patentanspruchs 1 weist demgegenüber den Vorteil auf, daß der Zulaufkanal im Querschnitt eine ovale oder elliptische Form aufweist, wobei die größte Ausdehnung in Umfangsrichtung des Ventilkörperteils weist. Dadurch vergrößert sich der Wandbereich zwischen dem Hohlraum und dem Zulaufkanal, beziehungsweise dem Zulaufkanal und er Außenwandfläche des Ventilkörperteils, ohne daß die Querschnittsfläche des Zulaufkanals verkleinert werden muß. Hierdurch läßt sich bei gleichen Außenabmessungen des Ventilkörperteils und bei gleicher Ausbildung des Hohlraums ein höherer Kraftstoffdruck im Zulaufkanal des Ventilkörperteils realisieren. Alternativ kann es auch vorgesehen sein, das Ventilkörperteil schlanker zu gestalten und den Kraftstoffdruck im Zulaufkanal unverändert zu lassen.

Ein Zulaufkanal mit ovalem Querschnitt bietet gegenüber einem kreisförmigen Querschnitt auch den Vorteil, daß aufgrund der größeren Wandstärke zwischen Zulaufkanal und Hohlraum beziehungsweise Zulaufkanal und Außenmantelfläche des Ventilkörperteils eine größere Toleranz bei der Fertigung des Ventilkörperteils zulässig ist, ohne die Stabilität gegenüber dem Kraftstoffhochdruck des Zulaufkanals einzubüßen. Dadurch kann das Ventilkörperteil mit geringerem Aufwand und damit kostengünstiger hergestellt werden.

In einem vorteilhaften Verfahren zur Herstellung des erfindungsgemäßen Kraftstoffeinspritzventils wird in einem zylinderförmigen Körper, der massiv ist und vorzugsweise aus Metall besteht, eine kreisrunde Bohrung außermittig und parallel zu dessen Längsachse ausgebildet. Der zylinderförmige Körper weist dabei einen Außendurchmesser auf, der größer ist als der gewünschte Außendurchmesser des Ventilkörperteils. Durch plastische Verformung des zylinderförmigen Körpers wird unter Beibehaltung der Zylinderform der Außenmantelfläche der gewünschte Außendurchmesser hergestellt, wobei sich der Querschnitt des Zulaufkanals verformt und eine ovale oder elliptische Form annimmt. Erst nach diesem Verfahrensschritt wird der Hohlraum ausgebildet, so daß der Zulaufkanal in der Wand des Hohlraums verläuft. Durch dieses Verfahren ist es in vorteilhafter Weise möglich, einen Zulaufkanal mit ovalem oder näherungsweise elliptischem Querschnitt herzustellen, ohne einen solchen Zulaufkanal direkt, beispielsweise durch Bohren oder Fräsen, im Ventilkörperteil auszubilden, was aufwendig und damit kostenintensiv wäre.

### Zeichnung

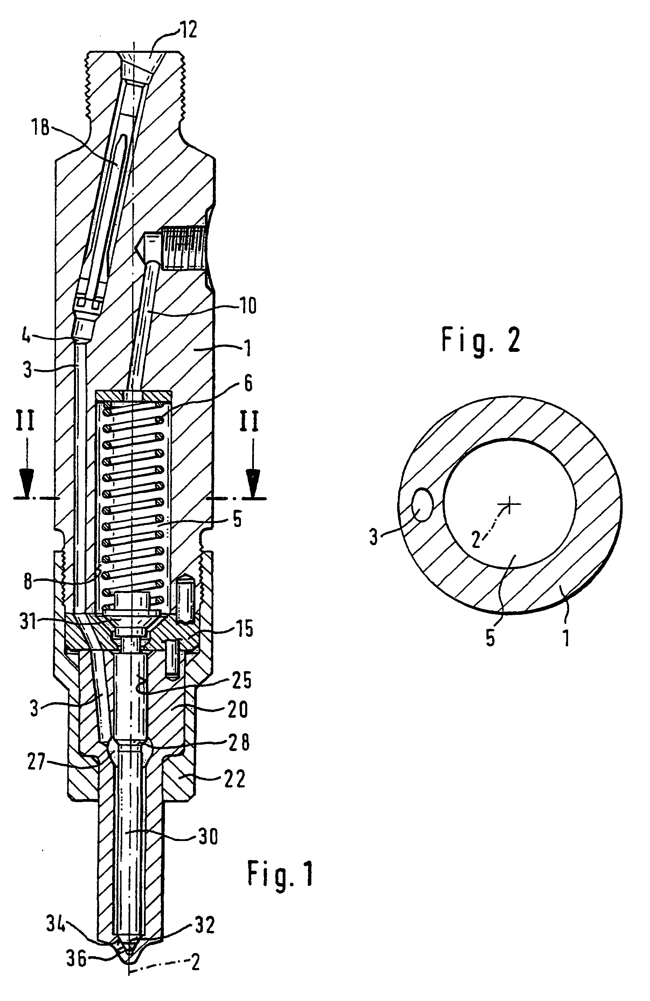

In der Zeichnung ist ein Ausführungsbeispiel eines erfindungsgemäßen Kraftstoffeinspritzventils dargestellt. Es zeigt die Figur 1 einen Längsschnitt durch ein erfindungsgemäßes Kraftstoffeinspritzventil und Figur 2 einen Querschnitt durch das in Figur 1 gezeigte Kraftstoffeinspritzventil auf der Höhe des Federraums entlang der Linie II-II.

### Beschreibung des Ausführungsbeispiels

In Figur 1 ist ein Längsschnitt durch ein erfindungsgemäßes Kraftstoffeinspritzventil dargestellt. Das Kraftstoffeinspritzventil weist einen Ventilkörper 20 auf, der mit einer Spannmutter 22 unter Zwischenlage einer Zwischenscheibe 15 gegen ein als Ventilhaltekörper 1 ausgebildetes Ventilkörperteil verspannt ist. Im Ventilkörper 20 ist eine Bohrung 25 ausgebildet, die als Sackbohrung ausgeführt ist und an deren brennraumzugewandten Ende ein im wesentlichen konischer Ventilsitz 32 ausgebildet ist, in dem wenigstens eine Einspritzöffnung 36 angeordnet ist. In der Bohrung 25 ist ein kolbenförmiges Ventilglied 30 angeordnet, das in einem brennraumabgewandten Abschnitt in der Bohrung 25 geführt ist und das sich unter Bildung einer Druckschulter 28 zum Brennraum hin verjüngt. Am brennraumseitigen Ende des Ventilgliedes 30 ist eine im wesentlichen konische Ventildichtfläche 34 ausgebildet, die mit dem Ventilsitz 32 zur Steuerung der wenigstens einen Einspritzöffnung 36 zusammenwirkt. Die Druckschulter 28 ist in einem im Ventilkörper 20 ausgebildeten Druckraum 27 angeordnet, der sich als ein das Ventilglied 30 umgebender Ringkanal bis zum Ventilsitz 32 fortsetzt. Am brennraumabgewandten Ende des Ventilgliedes 30 ist dieses mit einem Federteller 31 verbunden, der in einer Öffnung der Zwischenscheibe 15 angeordnet ist und bis in einen im Ventilhaltekörper 1 ausgebildeten, als Federraum 5 ausgebildeten zentralen Hohlraum ragt. Der Federraum 5 ist als mittige Bohrung 8 im Ventilhaltekörper 1 ausgebildet und zumindest näherungsweise koaxial zur Bohrung 25 angeordnet. Im Federraum 5 ist eine als Schließfeder 6 ausgebildete Vorrichtung angeordnet, wobei die Schließfeder 6 unter Vorspannung steht und sich brennraumzugewandt am Federteller 31 abstützt und brennraumabgewandt an der brennraumabgewandten Bodenfläche des Federraums 5. Durch die Vorspannung der Schließfeder 6 wird eine Schließkraft auf das Ventilglied 30 ausgeübt, mit der dieses mit der Ventildichtfläche 34 gegen den Ventilsitz 32 gepreßt wird. In die brennraumabgewandte Bodenfläche des Federraums 5 mündet ein Ablaufkanal 10, über den das aus dem Druckraum 27 am geführten Abschnitt des Ventilgliedes 30 vorbei in den Federraum 5 strömende Lecköl abfließen kann.

Der Druckraum 27 ist über einen im Ventilhaltekörper 1, der Zwischenscheibe 15 und dem Ventilkörper 20 verlaufenden Zulaufkanal 3 mit Kraftstoff unter hohem Druck befüllbar. Das dem Druckraum 27 entgegengesetzte Ende des Zulaufkanals 3 mündet in einen Hochdruckanschluß 12, der an der brennraumabgewandten Stirnseite des Ventilhaltekörpers 1 etwa in der Längsachse 2 des Ventilhaltekörpers 1 angeordnet ist und der mit einem in der Zeichnung nicht dargestellten Kraftstoffhochdrucksystem verbunden ist. Vom Hochdruckanschluß 12 führt der Zulaufkanal 3 in einem Winkel zur Längsachse 2 des Ventilhaltekörpers 1 geneigt bis zu einer Knickstelle 4. Von der Knickstelle 4 an verläuft der Zulaufkanal 3 zumindest annähernd parallel zur Längsachse 2 des Ventilhaltekörpers 1 in der Wand des Federraums 5 bis zur Zwischenscheibe 15. In der Zwischenscheibe 15 und im Ventilkörper 20 verläuft der Zulaufkanal 3 wieder geneigt zur Längsachse 2 des Ventilhaltekörpers 1 und schneidet den Druckraum 27 auf der Höhe der Druckschulter 28 des Ventilgliedes 30. Zwischen dem Hochdruckanschluß 12 und der Knickstelle 4 kann im Zulaufkanal 3 ein Kraftstofffilter 18 vorgesehen sein, der störende Partikel aus dem zulaufenden Kraftstoff herausfiltert.

In Figur 2 ist ein Querschnitt durch das in Figur 1 gezeigte Kraftstoffeinspritzventil auf der Höhe des Federraums 5 dargestellt. In der Figur 2 ist die Schließfeder 6 aus Übersichtlichkeitsgründen weggelassen. Der Zulaufkanal 3 weist im Querschnitt eine in Umfangsrichtung des Ventilhaltekörpers 1 größere Ausdehnung auf als in zumindest annähernd radialer Richtung, beispielsweise, wie in Figur 2 dargestellt, einen ovalen, näherungsweise elliptischen Querschnitt. Hierdurch ist die Wandstärke zwischen dem Zulaufkanal 3 und dem Federraum 5 beziehungsweise dem Zulaufkanal 3 und der Außenmantelfläche des Ventilhaltekörpers 1 größer ausgebildet als bei einem Zulaufkanal 3 mit kreisförmigem Querschnitt und derselben Größe der Querschnittsfläche. Alternativ zu dem in Figur 2 dargestellten Querschnitt kann es auch vorgesehen sein, daß der Zulaufkanal 3 eine andere Querschnittsform aufweist. Die Orientierung des Zulaufkanals 3 ist jedoch stets so, daß die größte Ausdehnung des Querschnitts des Zulaufkanals in Umfangsrichtung des Ventilhaltekörpers 1 weist.

Die Funktionsweise des Kraftstoffeinspritzventils ist wie folgt: Über den Zulaufkanal 3 wird Kraftstoff unter hohem Druck in den Druckraum 27 gefördert. Durch den Kraftstoffdruck ergibt sich eine hydraulische Kraft auf die Druckschulter 28 des Ventilgliedes 30. Übersteigt die in axialer Richtung wirkende Komponente dieser hydraulischen Kraft die Kraft der Schließfeder 6, so hebt das Ventilglied 30 mit der Ventildichtfläche 34 vom Ventilsitz 32 ab, bis es an einer in der Zwischenscheibe 15 ausgebildeten Anschlagfläche zur Anlage kommt. Durch diese Öffnungshubbewegung des Ventilgliedes 30 wird die Einspritzöffnung 36 mit dem Druckraum 27 verbunden und Kraftstoff wird in den Brennraum der Brennkraftmaschine eingespritzt. Das Ende des Einspritzvorgangs wird dadurch eingeleitet, daß der Kraftstoffdruck im Zulaufkanal 3 abnimmt und damit auch im Druckraum 27. Dadurch verringert sich die hydraulische Kraft auf die Druckschulter 28 des Ventilgliedes 30, bis deren axiale Komponente kleiner wird als die Kraft der Schließfeder 6. Das Ventilglied 30 wird nun wieder durch die Kraft der Schließfeder 6 in Richtung auf den Ventilsitz 32 zu beschleunigt, bis das Ventilglied 30 mit der Ventildichtfläche 34 am Ventilsitz 32 zur Anlage kommt und so die Einspritzöffnung 36 verschließt.

Alternativ zu der in Figur 1 gezeigten Schließfeder 6 kann es auch vorgesehen sein, daß die Schließkraft auf das Ventilglied 30 durch eine andere, beispielsweise eine hydraulische oder magnetische Vorrichtung ausgeübt wird. Es kann auch vorgesehen sein, daß statt des Federraums 5 eine zentrale Öffnung ausgebildet ist, in der ein mechanisches Element angeordnet ist, das die Schließkraft auf das Ventilglied 30 überträgt. Es ist darüber hinaus auch möglich, statt dem in der Zeichnung dargestellten Ventilkörper 20 andere mit dazu passenden Ventilgliedern zu verwenden, zum Beispiel nach außen öffnende Ventilglieder. Neben dem gezeigten Kraftstoffeinspritzventil kann der erfindungsgemäße Zulaufkanal 3 auch an jedem anderen Ventilhaltekörper 1 verwirklicht werden, der einen zentralen Hohlraum und einen in der Wand dieses Hohlraums verlaufenden Zulaufkanal aufweist.

Der erfindungsgemäße Kraftstoffzulaufkanal kann in vorteilhafter Weise mit dem folgenden Verfahren hergestellt werden: In einen zylinderförmigen Körper, der massiv ist und vorzugsweise aus Metall besteht, wird außermittig und zumindest annähernd parallel zur Längsachse des zylinderförmigen Körpers eine Bohrung ausgebildet, die einen kreisförmigen Querschnitt aufweist. Der zylinderförmige Körper weist dabei einen Außendurchmesser auf, der größer ist als der vorgegebene Wert des herzustellenden Ventilhaltekörpers 1. Durch mechanische Bearbeitung wird der zylinderförmige Körper anschließend plastisch verformt, so daß er unter Beibehaltung seiner zylindrischen Form der Außenmantelfläche im Durchmesser verringert wird, bis der vorgegebene Wert des herzustellenden Ventilhaltekörpers 1 erreicht ist. Dadurch verändert sich auch der Querschnitt des Zulaufkanals 3 und er nimmt eine ovale bis elliptische Querschnittskontur an. Nach dieser Verformung wird ein den Federraum 5 bildender zentraler Hohlraum im Ventilhaltekörper 1 ausgebildet, so daß der Zulaufkanal 3 in der Wand des Federraums 5 verläuft. Danach können alle weiteren Merkmale des Ventilhaltekörpers 1 in herkömmlicher Art und Weise ausgebildet werden. Die plastische Verformung des zylinderförmigen Körpers geschieht dabei in vorteilhafter Weise durch Walzen des zylinderförmigen Körpers, so daß eine dauerhafte plastische Umformung des zylinderförmigen Körpers unter Beibehaltung seiner zylindrischer Form der Außenmantelfläche möglich ist. Alternativ zum Walzen kann auch eine andere zweckdienliche Verformungsmethode gewählt werden.

## Patentansprüche

1. Kraftstoffeinspritzventil für Brennkraftmaschinen mit einem Ventilkörperteil (1), das eine Längsachse (2) aufweist und in dem ein zentraler Hohlraum (5) ausgebildet ist, in dem eine Vorrichtung (6) angeordnet ist, die eine Kraft auf ein Ventilglied (30) überträgt, und mit einem Zulaufkanal (3), der in der Wand des zentralen Hohlraums (5) parallel zur Längsachse (2) des Ventilkörperteils (1) verläuft und über welchen Zulaufkanal (3) Kraftstoff unter hohem Druck wenigstens einer Einspritzöffnung (36) zugeführt werden kann, **dadurch gekennzeichnet, daß** der Querschnitt des Zulaufkanals (3) in Umfangsrichtung eine größere Ausdehnung aufweist als in zumindest annähernd radialer Richtung.

2. Kraftstoffeinspritzventil nach Anspruch 1, **dadurch gekennzeichnet, daß** der Zulaufkanal (3) einen zumindest annähernd ovalen Querschnitt aufweist.

3. Kraftstoffeinspritzventil nach Anspruch 2, **dadurch gekennzeichnet, daß** die beiden voneinander am weitesten entfernten Punkte des ovalen Querschnitts des Zulaufkanals (3) zumindest annähernd denselben Abstand zur Längsachse (2) des Ventilkörpers (1) haben.

4. Kraftstoffeinspritzventil nach Anspruch 2, **dadurch gekennzeichnet, daß** der ovale Querschnitt des Zulaufkanals (3) zumindest annähernd eine Ellipse bildet.

5. Verfahren zur Herstellung eines Ventilkörperteils (1) eines Kraftstoffeinspritzventils nach Anspruch 1, **dadurch gekennzeichnet, daß**
- in einem zumindest näherungsweise zylinderförmigen Körper eine den Zulaufkanal (3) bildende Bohrung außermittig und zumindest annähernd parallel zu dessen Längsachse (2) ausgebildet wird,
- der Körper unter Beibehaltung seiner zumindest näherungsweise zylindrischen Form durch plastische Verformung im Durchmesser verkleinert wird, bis ein vorgegebener Durchmesser erreicht ist, wobei der Querschnitt der Bohrung derart verändert wird, daß dieser in Umfangsrichtung eine größere Ausdehnung aufweist als in zumindest annähernd radialer Richtung im Körper der zentrale Hohlraum (5) ausgebildet wird, so daß der Zulaufkanal (3) in der Wand des zentralen Hohlraums (5) verläuft.

6. Verfahren nach Anspruch 5, **dadurch gekennzeichnet, daß** der das Ventilkörperteil (1) bildende Körper aus Metall, vorzugsweise aus Stahl, besteht.

7. Verfahren nach Anspruch 6, **dadurch gekennzeichnet, daß** die plastische Verformung des zylindrischen Metallkörpers durch Walzen geschieht.

## Claims

1. Fuel injection valve for internal combustion engines, with a valve-body part (1) which has a longitudinal axis (2) and in which is formed a central cavity (5) in which is arranged a device (6) which transmits a force to a valve member (30), and with an inflow duct (3) which runs, parallel to the longitudinal axis (2) of the valve-body part (1), in the wall of the central cavity (5) and via which inflow duct (3) fuel can be supplied under high pressure to at least one injection orifice (36), **characterized in that** the cross section of the inflow duct (3) has a greater extent in the circumferential direction than in the at least approximately radial direction.

2. Fuel injection valve according to Claim 1, **characterized in that** the inflow duct (3) has an at least approximately oval cross section.

3. Fuel injection valve according to Claim 2, **characterized in that** the two points of the oval cross section of the inflow duct (3) which are furthest away from one another are at least approximately the same distance from the longitudinal axis (2) of the valve body (1).

4. Fuel injection valve according to Claim 2, **characterized in that** the oval cross section of the inflow duct (3) forms at least approximately an ellipse.

5. Method for producing a valve-body part (1) of a fuel injection valve according to Claim 1, **characterized in that**
- a bore constituting the inflow duct (3) is formed in an at least approximately cylindrical body eccentrically and at least approximately parallel to the longitudinal axis (2) of the latter,
- the body, whilst maintaining its at least approximately cylindrical shape, is reduced in diameter by plastic deformation, until a predetermined diameter is reached, the cross section of the bore being varied in such a way that the said cross section has a greater extent in the circumferential direction than in the at least approximately radial direction,
- the central cavity (5) is formed in the body, so that the inflow duct (3) runs in the wall of the central cavity (5).

6. Method according to Claim 5, **characterized in that** the body constituting the valve-body part (1) consists of metal, preferably of steel.

7. Method according to Claim 6, **characterized in that** the plastic deformation of the cylindrical metal body takes place by rolling.

## Revendications

1. Injecteur de carburant pour moteurs à combustion interne comportant une pièce de corps de soupape (1) présentant un axe longitudinal (2) et dans laquelle est formée une chambre creuse centrale (5), logeant un dispositif (6) qui transmet une force à un organe de soupape (30), et un canal d'alimentation (3) parallèle à l'axe longitudinal (2) de la pièce de corps de soupape (1) dans la paroi de la chambre creuse centrale (5), ce canal d'alimentation (3) amenant du carburant sous haute pression à au moins une ouverture d'injecteur (36),
**caractérisé en ce que**
la section du canal d'alimentation (3) présente une plus grande dimension dans le sens périphérique que dans le sens au moins approximativement radial.

2. Injecteur de carburant selon la revendication 1,
**caractérisé en ce que**
le canal d'alimentation (3) présente une section au moins approximativement ovale.

3. Injecteur de carburant selon la revendication 2,
**caractérisé en ce que**
les deux points les plus éloignés l'un de l'autre de la section ovale du canal d'alimentation (3) ont au moins approximativement le même écart par rapport à l'axe longitudinal (2) du corps de soupape (1).

4. Injecteur de carburant selon la revendication 2,
**caractérisé en ce que**
la section ovale du canal d'alimentation (3) forme au moins approximativement une ellipse.

5. Procédé de fabrication d'une pièce de corps de soupape (1) d'un injecteur de carburant selon la revendication 1,
**caractérisé en ce qu'**
- on forme dans un corps au moins approximativement cylindrique un alésage formant le canal d'alimentation (3) excentré et au moins approximativement parallèle à son axe longitudinal (2),
- on réduit le corps en diamètre tout en maintenant sa forme au moins approximativement cylindrique par déformation plastique, jusqu'à atteindre un diamètre prédéfini, la section de l'alésage étant modifiée de telle sorte que celle-ci présente une plus grande dimension dans le sens périphérique que dans le sens au moins approximativement radial, et
- on forme la chambre creuse centrale (5) dans le corps de telle sorte que le canal d'alimentation (3) passe dans la paroi de la chambre creuse centrale (5).

6. Procédé selon la revendication 5,
**caractérisé en ce que**
le corps formant la pièce de corps de soupape (1) est en métal, de préférence en acier.

7. Procédé selon la revendication 6,
**caractérisé en ce que**
la déformation plastique du corps métallique cylindrique est produite par laminage.
